# EUROPEAN PATENT APPLICATION

(11) **EP 4 550 514 A1**
(43) Date of publication of application: **07.05.2025**
(21) Application number: 23831078.3
(22) Date of filing: 13.06.2023
(51) Int. Cl.: H01M 10/0587, H01M 4/13, H01M 4/505, H01M 4/525, H01M 10/052

(54) **NON-AQUEOUS ELECTROLYTE SECONDARY BATTERY**

(30) Priority: 29.06.2022 JP 2022104594
(71) Applicant: Panasonic Intellectual Property Management Co., Ltd., Kadoma-shi, Osaka 571-0057 (JP)
(72) Inventor: SHIBUTANI Satoshi, Osaka 571-0057 (JP)
(74) Representative: Eisenführ Speiser
(86) International application number: PCT/JP2023/021895
(87) International publication number: WO 2024/004630

(57) **Abstract**

Provided is a non-aqueous electrolyte secondary battery having excellent safety when an impact from the outside is received. A non-aqueous electrolyte secondary battery according to one aspect of the present disclosure comprises: an electrode body in which a band-shaped positive electrode and a band-shaped negative electrode are wound via a separator; a non-aqueous electrolyte; and an external body accommodating the electrode body and the non-aqueous electrolyte. The positive electrode has a positive electrode current collector and a positive electrode mixture layer formed on both surfaces of the positive electrode current collector. The positive electrode has, near a winding inner end, a tapered portion from the surface of one positive electrode mixture layer to the positive electrode current collector, the tapered portion becoming thinner toward the winding inner end.

## Description

### TECHNICAL FIELD

The present disclosure generally relates to a non-aqueous electrolyte secondary battery.

### BACKGROUND ART

Non-aqueous electrolyte secondary batteries comprising a wound electrode assembly in which a positive electrode and a negative electrode (electrodes) are wound with a separator interposed therebetween are widely used. Patent Literatures 1 and 2 disclose art in which a proximity of an end on an inner winding side of a mixture layer of an electrode is thinned to prevent peeling of the mixture layer and cutting of the electrode in a proximity of a winding axis of an electrode assembly with a small curvature radius of the electrode.

### CITATION LIST

### PATENT LITERATURE

PATENT LITERATURE 1: Japanese Unexamined Patent Application Publication No. 2009-134916
PATENT LITERATURE 2: Japanese Unexamined Patent Application Publication No. 2011-198483

### SUMMARY

In recent years, increase in capacity and increase in output of the non-aqueous electrolyte secondary battery used for electric vehicles, power storage equipment, and the like are in progress. The increase in capacity and increase in output of the battery increase heat quantity generated if the battery causes internal short circuit, and reduction of a risk of occurrence of the internal short circuit has been required. The present inventors have made intensive investigation, and consequently found that deformation of the battery due to external impact causes an inner end of winding of the positive electrode to break a separator, and the internal short circuit may occur at this broken portion. The art described in Patent Literatures 1 and 2 do not investigate an effect on the battery if the battery is subjected to the external impact, and still has room for improvement.

It is an advantage of the present disclosure to provide a non-aqueous electrolyte secondary battery with excellent safety if subjected to external impact.

A non-aqueous electrolyte secondary battery of an aspect of the present disclosure comprises: an electrode assembly in which a band-shaped positive electrode and a band-shaped negative electrode are wound with a separator interposed therebetween; a non-aqueous electrolyte; and an exterior housing the electrode assembly and the non-aqueous electrolyte, wherein the positive electrode has a positive electrode current collector and a positive electrode mixture layer formed on both surfaces of the positive electrode current collector, and the positive electrode has a tapered portion such that, near an inner end of winding, the positive electrode becomes thinner toward the inner end of winding from one surface of the positive electrode mixture layer to the positive electrode current collector.

According to the secondary battery of an aspect of the present disclosure, the safety may be improved. Specifically, heat generation in an impact test may be inhibited.

### BRIEF DESCRIPTION OF DRAWINGS

FIG. 1 is an axial sectional view of a cylindrical secondary battery of an example of an embodiment.
FIG. 2 is a perspective view of a wound electrode assembly comprised in the secondary battery illustrated in FIG. 1.
FIG. 3 is a front view of a positive electrode and a negative electrode that constitute an electrode assembly of an example of an embodiment with an unwound state.

### DESCRIPTION OF EMBODIMENTS

Hereinafter, an example of an embodiment of a cylindrical secondary battery according to the present disclosure will be described in detail with reference to the Drawings. In the following description, specific shapes, materials, values, directions, and the like, which are examples for facilitating understanding of the present invention, may be appropriately modified with specifications of cylindrical secondary batteries. When a plurality of embodiments and modified examples are included in the following description, use in appropriate combination of characteristic portions thereof are anticipated in advance.

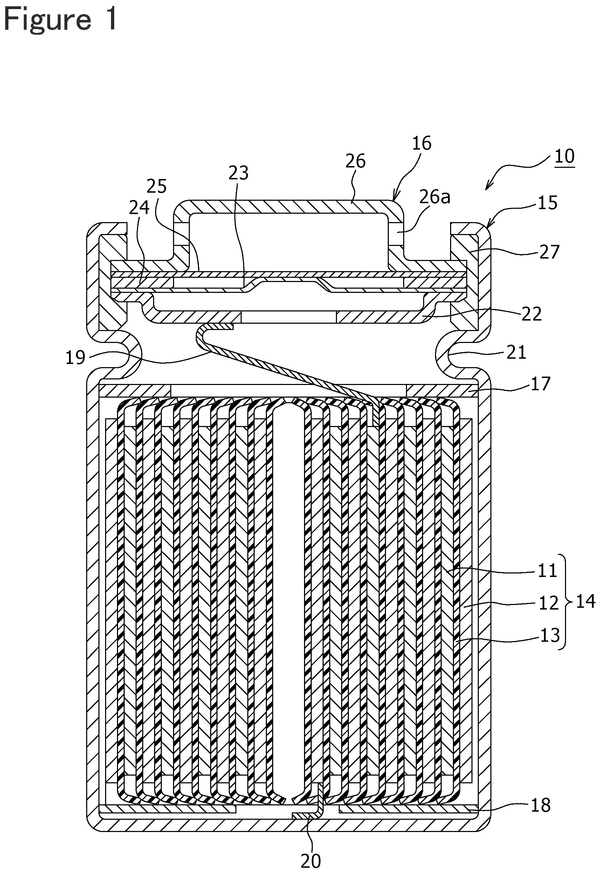

FIG. 1 is an axial sectional view of a cylindrical secondary battery 10 of an example of an embodiment. In the secondary battery 10 illustrated in FIG. 1, an electrode assembly 14 and a non-aqueous electrolyte (not illustrated) are housed in an exterior 15. The electrode assembly 14 has a wound structure in which a band-shaped positive electrode 11 and a band-shaped negative electrode 12 are wound with a separator 13 interposed therebetween. For a non-aqueous solvent in the non-aqueous electrolyte (organic solvent), carbonates, lactones, ethers, ketones, esters, and the like may be used, and two or more of these solvents may be mixed to use. When two or more of the solvents are mixed to use, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. For an electrolyte salt in the non-aqueous electrolyte, LiPF₆, LiBF₄, LiCF₃SO₃, and the like, and a mixture thereof may be used. An amount of the electrolyte salt dissolved in the non-aqueous solvent may be, for example, greater than or equal to 0.5 mol/L and less than or equal to 2.0 mol/L. Hereinafter, for convenience of description, a sealing assembly 16 side will be described as "the upper side", and the bottom side of the exterior 15 will be described as "the lower side".

An opening end of the exterior 15 is capped with the sealing assembly 16 to seal inside the secondary battery 10. Insulating plates 17 and 18 are provided on the upper and lower sides of the electrode assembly 14, respectively. A positive electrode lead 19 extends upward through a through hole of the insulating plate 17, and welded with the lower face of a filter 22, which is a bottom plate of the sealing assembly 16. In the secondary battery 10, a cap 26, which is a top plate of the sealing assembly 16 electrically connected to the filter 22, becomes a positive electrode terminal. Meanwhile, a negative electrode lead 20 extends through a through hole of the insulating plate 18 toward the bottom side of the exterior 15, and welded with a bottom inner face of the exterior 15. In the secondary battery 10, the exterior 15 becomes a negative electrode terminal. When the negative electrode lead 20 is provided on the outer end of winding, the negative electrode lead 20 extends through an outside of the insulating plate 18 toward the bottom side of the exterior 15, and welded with the bottom inner face of the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed circularly along the circumferential direction of the exterior 15, and supports the sealing assembly 16 with the upper face thereof.

The sealing assembly 16 has a stacked structure of a filter 22, a lower vent member 23, an insulating member 24, an upper vent member 25, and a cap 26 in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of centers thereof, and the insulating member 24 is interposed between each of the circumferences thereof. If the internal pressure of the battery increases due to abnormal heat generation, for example, the lower vent member 23 breaks and thus the upper vent member 25 expands toward the cap 26 side to be separated from the lower vent member 23, resulting in cutting off of an electrical connection between both the members. If the internal pressure further increases, the upper vent member 25 breaks, and gas is discharged through an opening 26a of the cap 26.

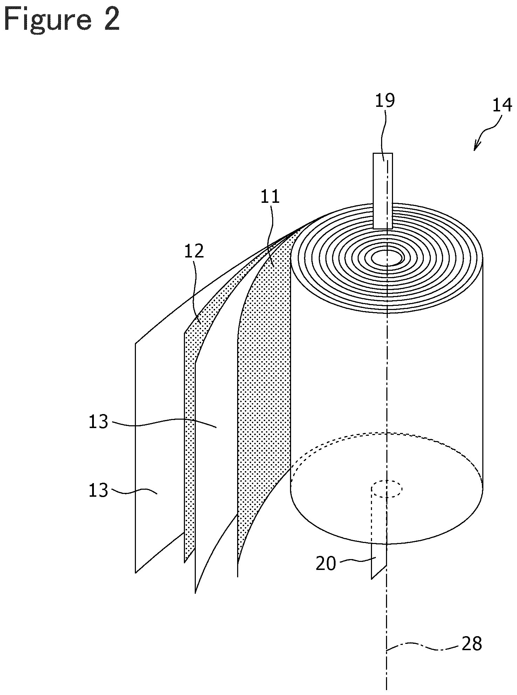

Next, the electrode assembly 14 will be described with reference to FIG. 2. FIG. 2 is a perspective view of the electrode assembly 14. As described above, the electrode assembly 14 has a wound structure in which the positive electrode 11 and the negative electrode 12 are spirally wound with the separator 13 interposed therebetween. All of the positive electrode 11, the negative electrode 12, and the separator 13 are formed in a band shaped, and spirally wound around a winding core disposed along a winding axis 28 to be alternately stacked in the radial direction of the electrode assembly 14. In the radial direction, the winding axis 28 side is referred to as the inner peripheral side, and the opposite side thereof is referred to as the outer peripheral side. In the electrode assembly 14, the longitudinal direction of the positive electrode 11 and the negative electrode 12 becomes a winding direction, and the short direction of the positive electrode 11 and the negative electrode 12 becomes an axial direction. The positive electrode lead 19 extends, on the upper end of the electrode assembly 14, toward the axial direction from a substantial center between the center and the outermost circumference in the radial direction. The negative electrode lead 20 extends, on the lower end of the electrode assembly 14, toward the axial direction from near the winding axis 28.

For the separator 13, a porous sheet having an ion permeation property and an insulation property is used. Specific examples of the porous sheet include a fine porous thin film, a woven fabric, and a nonwoven fabric. As a material of the separator 13, an olefin resin such as polyethylene and polypropylene is preferable. A thickness of the separator 13 is, for example, greater than or equal to 10 µm and less than or equal to 50 µm. The separator 13 has tended to be thinned as higher capacity and higher output of the battery.

A piercing strength of the separator 13 is preferably greater than or equal to 0.1 N. If the piercing strength of the separator 13 is less than 0.1 N, the separator 13 may break in winding the electrode assembly 14. The piercing strength of the separator 13 is preferably less than or equal to 15 N. If the piercing strength of the separator 13 is greater than 15 N, a porosity of the separator 13 becomes small, and thus resistance of the electrolyte liquid of the secondary battery 10 may increase. The piercing strength of the separator 13 may be greater than or equal to 0.5 N, may be greater than or equal to 1 N, may be greater than or equal to 2 N, or may be greater than or equal to 3 N. The piercing strength of the separator 13 may be less than or equal to 10 N, may be less than or equal to 8 N, may be less than or equal to 7 N, or may be less than or equal to 5 N.

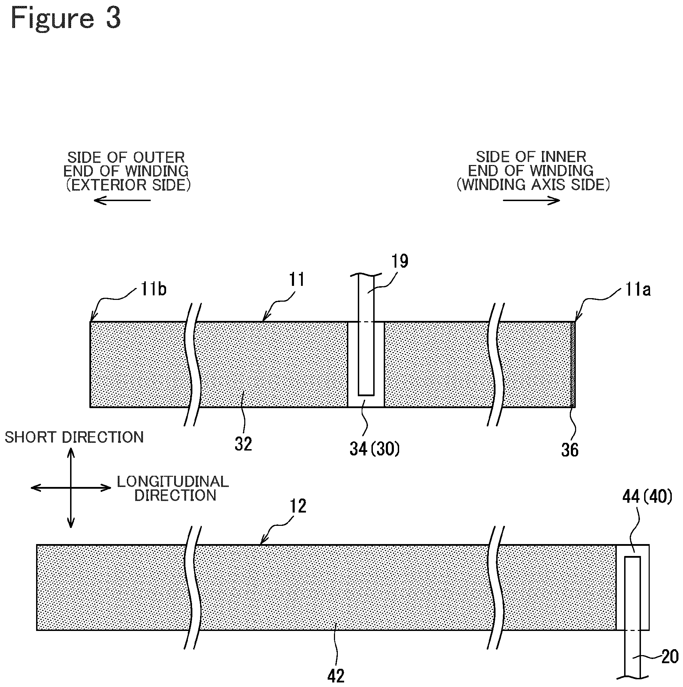

Next, the positive electrode 11 and the negative electrode 12 according to the present embodiment will be described with reference to FIG. 3. FIG. 3 is a front view of the positive electrode 11 and the negative electrode 12 constituting the electrode assembly 14. FIG. 3 illustrates the positive electrode 11 and the negative electrode 12 in an unwound state. As exemplified in FIG. 3, the negative electrode 12 is formed to be larger than the positive electrode 11 to prevent precipitation of lithium on the negative electrode 12 in the electrode assembly 14. In specific, a length of the negative electrode 12 in the short direction is larger than a length of the positive electrode 11 in the short direction. In addition, a length the negative electrode 12 in the longitudinal direction is larger than a length of the positive electrode 11 in the longitudinal direction. As a result, at least a portion on which a positive electrode mixture layer 32 of the positive electrode 11 is formed is disposed opposite to a portion on which a negative electrode mixture layer 42 of the negative electrode 12 is formed with the separator 13 interposed therebetween when wound as the electrode assembly 14.

The negative electrode 12 has a band-shaped negative electrode current collector 40 and the negative electrode mixture layer 42 formed on a surface of the negative electrode current collector 40. The negative electrode mixture layer 42 is formed on both an inner peripheral side and an outer peripheral side of the negative electrode current collector 40, and preferably formed on the entire region of both the surfaces of the negative electrode current collector 40 except for a negative electrode exposed portion 44, described later. For the negative electrode current collector 40, a foil of a metal such as copper, a film in which such a metal is disposed on a surface layer thereof, and the like are used, for example. A thickness of the negative electrode current collector 40 is, for example, greater than or equal to 5 µm and less than or equal to 30 µm.

For example, the negative electrode mixture layer 42 includes a negative electrode active material and a binder. The negative electrode mixture layer 42 may be produced by, for example, applying a negative electrode mixture slurry including the negative electrode active material, the conductive agent, the binder, and a solvent such as water on both the surfaces of the negative electrode current collector 40, and drying and then rolling.

In the example illustrated in FIG. 3, the negative electrode exposed portion 44 is provided in an entire length in the short direction of the current collector near the inner end of winding in the longitudinal direction of the negative electrode 12. The negative electrode exposed portion 44 is a portion to which the negative electrode lead 20 is connected and a portion where a surface of the negative electrode current collector 40 is uncovered with the negative electrode mixture layer 42. The negative electrode exposed portion 44 is more widely formed than a width of the negative electrode lead 20 in the longitudinal direction. The negative electrode exposed portion 44 is preferably provided on both surfaces of the negative electrode 12 so as to be stacked in the thickness direction of the negative electrode 12. The negative electrode lead 20 is bonded to the negative electrode exposed portion 44 with, for example, ultrasonic welding. When wound as the electrode assembly 14, the negative electrode lead 20 projects downward from an end surface in the short direction.

The position of the negative electrode lead 20 to be disposed is not limited to the example illustrated in FIG. 3, and the negative electrode lead 20 may be provided only on the outer end of winding of the negative electrode 12. The negative electrode lead 20 may also be provided on the inner end of winding and outer end of winding of the negative electrode 12. In this case, the current collectability is improved. Contacting the negative electrode exposed portion 44 in the outer end of winding of the negative electrode 12 with the inner peripheral surface of the exterior 15 (see FIG. 1) may electrically connect the outer end of winding with the exterior 15 without the negative electrode lead 20 on the outer end of winding of the negative electrode 12. The negative electrode exposed portion 44 is provided by, for example, intermittent application in which the negative electrode mixture slurry is not applied on a part of the negative electrode current collector 40.

The negative electrode active material included in the negative electrode mixture layer 42 is not particularly limited as long as it may reversibly occlude and release Li ions, and a carbon material such as graphite is typically used. The graphite may be any of: natural graphite such as flake graphite, massive graphite, and amorphous graphite; and artificial graphite such as massive artificial graphite and graphitized mesophase carbon microbead. As the negative electrode active material, a metal that forms an alloy with Li, such as Si or Sn, a metal compound including Si, Sn, or the like, a lithium-titanium composite oxide, or the like may be used. For example, a silicon oxide represented by SiOₓ (x represents 0.5 to 1.6), a silicon-containing material in which Si fine particles are dispersed in a lithium silicate phase represented by Li_{2y}SiO_{(2+y)} (0 < y < 2), a silicon-containing material in which Si fine particles are dispersed in a carbon phase, or the like may be used in combination with the graphite.

Examples of the binder included in the negative electrode mixture layer 42 include styrene-butadiene rubber (SBR), nitrile-butadiene rubber (NBR), carboxymethylcellulose (CMC) or a salt thereof (which may be CMC-Na, CMC-K, CMC-NH₄, and the like, or a partially neutralized salt), polyacrylic acid (PAA) or a salt thereof (which may be PAA-Na, PAA-K, and the like, or a partially neutralized salt), and polyvinyl alcohol (PVA). These materials may be used singly, or a plurality of kinds thereof may be mixed to use.

The positive electrode 11 has a band-shaped positive electrode current collector 30 and a positive electrode mixture layer 32 formed on a surface of the positive electrode current collector 30. The positive electrode mixture layer 32 is formed on both an inner peripheral side and an outer peripheral side of the positive electrode current collector 30, and preferably formed on the entire region of both the surfaces of the positive electrode current collector 30 except for a positive electrode exposed portion 34, described later. The inner end of winding 11a is an end on a winding axis 28 side of the positive electrode 11 in the longitudinal direction, and an outer end of winding 11b is an end on a side of the exterior 15 side of the positive electrode 11 in the longitudinal direction. In the example illustrated in FIG. 3, the positive electrode mixture layer 32 is formed on both the surfaces of the positive electrode current collector 30 on the inner end of winding 11a.

For the positive electrode current collector 30, a foil of a metal such as aluminum, a film in which such a metal is disposed on a surface layer thereof, and the like are used, for example. A thickness of the positive electrode current collector 30 is, for example, greater than or equal to 10 µm and less than or equal to 30 µm.

The positive electrode mixture layer 32 includes, for example, a positive electrode active material, a conductive agent, and a binder. The positive electrode mixture layer 32 may be produced by, for example, applying a positive electrode mixture slurry including the positive electrode active material, the conductive agent, the binder, and a solvent such as N-methyl-2-pyrrolidone (NMP) on both the surfaces of the positive electrode current collector 30, and drying and then rolling.

On the positive electrode 11, the positive electrode exposed portion 34 where a surface of the positive electrode current collector 30 is exposed is provided. The positive electrode exposed portion 34 is a portion to which the positive electrode lead 19 is connected and a portion where a surface of the positive electrode current collector 30 is uncovered with the positive electrode mixture layer 32. The positive electrode exposed portion 34 is more widely formed than the positive electrode lead 19 in the longitudinal direction. The positive electrode exposed portion 34 is preferably provided on both surfaces of the positive electrode 11 so as to be stacked in the thickness direction of the positive electrode 11. The positive electrode lead 19 is bonded to the positive electrode exposed portion 34 with, for example, ultrasonic welding.

In the example illustrated in FIG. 3, the positive electrode exposed portion 34 is provided at a substantial center in the longitudinal direction of the positive electrode 11 over the entire length in the short direction. The position of the positive electrode exposed portion 34 is not limited to this example, but the positive electrode exposed portion 34 is preferably provided at a position of substantially same distance from the inner end of winding 11a and the outer end of winding 11b from the viewpoint of current collectability. The positive electrode lead 19 connected to the positive electrode exposed portion 34 provided at such a position allows the positive electrode lead 19 to protrude and to be disposed upward at substantial center in a radial direction of the electrode assembly 14 from the end surface in the short direction when wound as the electrode assembly 14. The positive electrode exposed portion 34 is provided by, for example, intermittent application in which the positive electrode mixture slurry is not applied on a part of the positive electrode current collector 30.

Examples of the positive electrode active material included in the positive electrode mixture layer 32 include a lithium-transition metal composite oxide containing metal elements such as Ni, Co, and Mn. Examples of the positive electrode active material include an NCA-based lithium-transition metal composite oxide containing Ni, Co, and Al and an NCM-based lithium-transition metal composite oxide containing Ni, Co, and Mn. These may be used singly, or a plurality of kinds thereof may be mixed to use. The NCA-based lithium-transition metal composite oxide is represented by, for example, the general formula LiₐNi_{b}Co_{c}Al_{d}M1ₑO₂, wherein 0.8 ≤ a ≤ 1.2, 0.6 ≤ b ≤ 0.95, 0.01 ≤ c ≤ 0.2, 0.01 ≤ d ≤ 0.2, 0 ≤ e ≤ 0.1, b+c+d+e = 1, and M1 represents at least one element selected from the group consisting of W, Nb, Mg, Ti, and Mo. The NCM-based lithium-transition metal composite oxide is represented by, for example, the general formula Li_{f}Ni_{g}CoₕMnᵢM2ⱼO₂, wherein 0.8 ≤ f ≤ 1.2, 0.6 ≤ g ≤ 0.95, 0.01 ≤ h ≤ 0.2, 0.01 ≤ i ≤ 0.2, 0 ≤ j ≤ 0.1, g+h+i+j = 1, and M2 represents at least one element selected from the group consisting of W, Nb, Mg, Ti, and Mo.

Examples of the conductive agent included in the positive electrode mixture layer 32 include carbon particles such as carbon black (CB), acetylene black (AB), Ketjenblack, carbon nanotube (CNT), graphene, and graphite. These may be used singly, or a plurality of kinds thereof may be mixed to use.

Examples of the binder included in the positive electrode mixture layer 32 include a fluororesin such as polytetrafluoroethylene (PTFE) and polyvinylidene fluoride (PVDF), a polyimide resin, an acrylic resin, a polyolefin resin, and polyacrylonitrile (PAN). These may be used singly, or a plurality of kinds thereof may be mixed to use.

The positive electrode 11 has a tapered portion 36 such that, near the inner end of winding 11a, the positive electrode 11 becomes thinner toward the inner end of winding 11a from one surface of the positive electrode mixture layer 32 to the positive electrode current collector 30. This may inhibit that the inner end of winding 11a of the positive electrode 11 breaks the separate if the battery is deformed due to external impact, and thereby improves the safety of the battery.

The positive electrode 11 preferably has the tapered portion 36 such that, in the inner end of winding 11a, the positive electrode 11 becomes thinner toward the inner end of winding 11a from a surface of the positive electrode mixture layer 32 on an inner peripheral side to the positive electrode current collector 30. That is, an inclined surface of the tapered portion 36 preferably faces the inner peripheral side. The separator 13 positioned inside the positive electrode 11 easily breaks near the winding axis 28 of the electrode assembly 14, and thus the inclined surface of the tapered portion 36 facing the inner peripheral side may more improve the safety of the battery.

A length L of the tapered portion 36 in the longitudinal direction of the positive electrode 11 is preferably less than or equal to 1 mm. If the length L of the tapered portion 36 is greater than 1 mm, the effect by the tapered portion 36 may deteriorate. A lower limit of the length L of the tapered portion 36 is, for example, 0.05 mm. A thickness D of the positive electrode 11 is, for example, greater than or equal to 170 µm. An upper limit of the thickness D of the positive electrode 11 is, for example, 500 µm. The length L of the tapered portion in the longitudinal direction of the positive electrode 11 and the thickness D of the positive electrode preferably satisfy L/D ≤ 6. A lower limit of L/D is, for example, 0.1. The length L of the tapered portion 36 and the thickness D of the positive electrode 11 satisfying the above relationship may more improve the safety of the battery.

The inclined surface of the tapered portion 36 may be continuously inclined or discontinuously inclined on a cross section along the longitudinal direction of the positive electrode 11. That is, the inclination of the inclined surface of the tapered portion 36 may be constant or may be changed from the surface of the positive electrode mixture layer 32 on the inner peripheral side to the positive electrode current collector 30. The inclined surface of the tapered portion 36 is preferably continuously inclined without steps on the cross section along the longitudinal direction of the positive electrode 11. The inclined surface of the tapered portion 36 may be, for example, linearly inclined, curvedly inclined, or steppedly inclined on the cross section along the longitudinal direction of the positive electrode 11. The end of the tapered portion 36 may be pointed or rounded.

A method for producing the tapered portion 36 is not particularly limited. The tapered portion 36 may be produced by forming the positive electrode mixture layer 32 on both the surfaces of the positive electrode current collector 30, and then polishing the inner end of winding 11a from one surface side of the positive electrode 11. The tapered portion 36 may also be produced by setting an amount of a positive electrode mixture slurry applied to be small near the inner end of winding 11a when the positive electrode mixture layer 32 is formed on both the surfaces of the positive electrode current collector 30.

The breakage of the separator 13 is affected by a compressive Young's modulus of the positive electrode 11. Increasing the compressive Young's modulus of the positive electrode 11 increases the active material density in the positive electrode mixture layer 32 to increase the battery capacity. However, change in shape of the positive electrode 11 decreases if the secondary battery 10 is subjected to impact, and thus the separator 13 tends to break. Decreasing the compressive Young's modulus of the positive electrode 11 may increase the change in shape of the positive electrode 11 if the secondary battery 10 is subjected to impact to reduce shearing stress to the separator 13. Therefore, the separator 13 hardly breaks but the battery capacity decreases.

The compressive Young's modulus of the positive electrode 11 is preferably less than or equal to 3000 MPa. If the compressive Young's modulus of the positive electrode 11 is greater than 3000 MPa, the active material density in the positive electrode mixture layer 32 becomes excessively high, which may cause cracking of the positive electrode active material to decrease the battery capacity.

The compressive Young's modulus of the positive electrode 11 is preferably greater than or equal to 1200 MPa. If the compressive Young's modulus of the positive electrode 11 is less than 1200 MPa, the active material density in the positive electrode mixture layer 32 becomes low, which may decrease the battery capacity.

Setting the compressive Young's modulus of the positive electrode 11 to be within the above range may increase the battery capacity to more improve the safety of the battery. The compressive Young's modulus of the positive electrode 11 may be less than or equal to 2500 MPa. The compressive Young's modulus of the positive electrode 11 may be greater than or equal to 1500 MPa.

The compressive Young's modulus of the positive electrode 11 may be calculated from data of a linear region indicating elastic deformation obtained by compressing the positive electrode 11 taken out by disassembling the secondary battery 10 charged to SOC 100% with a universal tester and then measuring a relationship between stress and strain of the positive electrode 11.

### EXAMPLES

Hereinafter, the present disclosure will be further described with Examples, but the present disclosure is not limited to these Examples.

### [Production of Positive Electrode]

Mixing 95 parts by mass of LiNi_{0.91}Co_{0.05}Al_{0.04}O₂, 2.5 parts by mass of acetylene black (AB), and 2.5 parts by mass of polyvinylidene fluoride (PVdF) having an average molecular weight of 1.1 million was performed, and an appropriate amount of N-methyl-2-pyrrolidone (NMP) was added to prepare a positive electrode mixture slurry. Next, this positive electrode mixture slurry was applied on both surfaces of a band-shaped positive electrode current collector composed of aluminum foil, the coating film was dried and rolled, and then cut to a predetermined electrode size to produce a positive electrode in which a positive electrode mixture layer was formed on both the surfaces of the positive electrode current collector. A thickness D of the positive electrode was 170 µm. At substantial center in the longitudinal direction of the positive electrode, a positive electrode exposed portion where the mixture layer was absent and the current collector surface was exposed was provided, and a positive electrode lead made of aluminum was welded with the positive electrode exposed portion. On one end in the longitudinal direction of the positive electrode, the positive electrode mixture layer formed on one surface of the positive electrode current collector was polished to provide a tapered portion having a sectional shape such that the positive electrode became thinner toward the inner end of winding from a surface of the positive electrode mixture layer on the inner peripheral side to the positive electrode current collector.

### [Production of Negative Electrode]

Mixing 100 parts by mass of artificial graphite, 1 part by mass of sodium carboxymethylcellulose (CMC-Na), and 1.2 parts by mass of styrene-butadiene rubber (SBR) was performed, and an appropriate amount of water was added to prepare a negative electrode mixture slurry. Then, this negative electrode mixture slurry was applied on both surfaces of a band-shaped negative electrode current collector composed of copper foil, the coating film was dried and rolled, and then cut to a predetermined electrode size to produce a negative electrode in which a negative electrode mixture layer was formed on both the surfaces of the negative electrode current collector. A negative electrode exposed portion where the mixture layer was absent and the current collector surface was exposed was provided on an inner end of winding in the longitudinal direction of the negative electrode, and a negative electrode lead made of nickel was welded with the negative electrode exposed portion.

### [Preparation of Non-aqueous electrolyte]

Into 100 parts by mass of a mixed solvent composed of ethylene carbonate (EC) and dimethyl methyl carbonate (DMC) (EC:DMC = 1:3 at a volume ratio), 5 parts by mass of vinylene carbonate (VC) was added. Into this mixed solvent, LiPF₆ was dissolved so that the concentration was 1 mol/L to prepare a non-aqueous electrolyte.

### [Production of Secondary Battery]

The above positive electrode and the above negative electrode were wound with a separator made of polyethylene interposed therebetween to produce an electrode assembly. A piercing strength of the separator was 4 N. At this time, the positive electrode was disposed so that the tapered portion faced the inner peripheral side on the inner end of winding. Thereafter, insulating plates were respectively disposed on the upper and lower sides of the electrode assembly, and the electrode assembly was housed in a bottomed cylindrical exterior housing can with 21 mm in diameter and 70 mm in height. Then, a negative electrode lead was welded with a bottom of the exterior housing can, and a positive electrode lead was welded with a sealing assembly. Thereafter, the non-aqueous electrolyte was injected inside the exterior housing can by a pressure reducing method, and then an opening end of the exterior housing can was sealed to be caulked to the sealing assembly with a gasket interposed therebetween to produce a secondary battery. The produced secondary battery was charged to SOC 100% and then disassembled, the positive electrode plate was cut to a predetermined size, and then the positive electrode plate was compressed with a universal tester to measure a relationship between stress and strain. Among the obtained data, the inclination was determined from data of a linear region being elastic deformation to derive a compressive Young's modulus of the positive electrode. The compressive Young's modulus of the positive electrode was 2000 MPa.

### <Example 2>

A secondary battery was produced in the same manner as in Example 1 except that, in the production of the positive electrode, the tapered portion was produced so that the length L was 1 mm.

### <Example 3>

A secondary battery was produced in the same manner as in Example 1 except that, in the production of the secondary battery, the positive electrode was disposed so that the tapered portion faced the outer peripheral side on the inner end of winding.

### <Example 4>

A secondary battery was produced in the same manner as in Example 1 except that: in the production of the positive electrode, the tapered portion was produced so that the length L was 1 mm; and in the production of the secondary battery, the positive electrode was disposed so that the tapered portion faced the outer peripheral side on the inner end of winding.

### <Comparative Example 1>

A secondary battery was produced in the same manner as in Example 1 except that, in the production of the positive electrode, the positive electrode mixture layer was not polished, and the tapered portion was not formed.

### <Comparative Example 2>

A secondary battery was produced in the same manner as in Example 1 except that, in the production of the positive electrode, both the positive electrode mixture layers formed on both the surfaces of the positive electrode current collector were polished to provide a tapered portion having a length L of 1 mm and having a cross section such that the positive electrode became thinner toward the inner end of winding from each of the surfaces of the positive electrode mixture layer on the inner peripheral side and the outer peripheral side to the positive electrode current collector.

### <Comparative Example 3>

A secondary battery was produced in the same manner as in Example 1 except that, in the production of the positive electrode, both the positive electrode mixture layers formed on both the surfaces of the positive electrode current collector were polished to provide a tapered portion having a length L of 10 mm and having a cross section such that the positive electrode became thinner toward the inner end of winding from each of the surfaces of the positive electrode mixture layer on the inner peripheral side and the outer peripheral side to the positive electrode current collector.

### [Impact Test]

The produced secondary battery was used to perform an impact test. Under an atmosphere at 25°C, the secondary battery was charged at a constant current of 0.3 C until 4.2 V. Thereafter, a test in accordance with a T6 collision test under the UN transportation test condition was performed. Specifically, a metallic round rod with 15.8 mm in diameter was placed at center of the secondary battery, and a weight with 9.1 kg was fallen from a height of three levels of 61 cm, 70 cm, or 80 cm to measure temperature on the side wall of the secondary battery with a thermocouple. Note that the falling height of a weight prescribed in the T6 collision test is 61 cm.

Table 1 summarizes the evaluation results of the impact test of the secondary batteries of Examples and Comparative Examples. Table 1 also shows the position, the length L, and the value of L/D of the tapered portion.

**[Table 1]**

| | Position of tapered portion / length L [mm] | L/D | Impact test results [°C] | | |
|---|---|---|---|---|---|
| | | | Weight height 61cm | Weight height 70cm | Weight height 80cm |
| Example 1 | Inner winding side /0.2mm | 1.2 | 25 | 25 | 25 |
| Example 2 | Inner winding side /1mm | 5.9 | 25 | 25 | 25 |
| Example 3 | Outer winding side /0.2mm | 1.2 | 25 | 25 | 30 |
| Example 4 | Outer winding side /1mm | 5.9 | 25 | 25 | 40 |
| Comparative Example 1 | - (No taper) | - | 25 | 80 | 90 |
| Comparative Example 2 | Both sides /1mm | 5.9 | 25 | 50 | 60 |
| Comparative Example 3 | Both sides /10mm | 59 | 25 | 70 | 80 |

Although the secondary batteries of Comparative Examples did not cause rise in temperature under the condition of the weight height of 61 cm, the temperature on the side wall rose to greater than or equal to 50°C when the weight height was increased to 70 cm and 80 cm. Meanwhile, the secondary batteries of Examples 1 to 4 suppressed the temperature on the side wall to less than or equal to 40°C even when the weight height was increased to as high as 80 cm. Particularly, in Examples 1 and 2, rise in temperature was not observed under all the conditions. Therefore, it is understood that the secondary battery comprising the positive electrode having the predetermined tapered portion improves the safety. Note that, in Comparative Example 2 in which the tapered portion was provided on both the surfaces of the positive electrode, the temperature on the side wall rose compared with Examples 2 and 4 in which the tapered portion was provided on only one surface of the positive electrode. A detail of this mechanism is unclear, but it is presumed that the acute angle around the positive electrode current collector on the inner end of winding in Comparative Example 2 adversely affects the temperature.

The present disclosure will be further described with the following embodiments.

### Constitution 1:

A non-aqueous electrolyte secondary battery, comprising:
an electrode assembly in which a band-shaped positive electrode and a band-shaped negative electrode are wound with a separator interposed therebetween;
a non-aqueous electrolyte; and
an exterior housing the electrode assembly and the non-aqueous electrolyte, wherein
the positive electrode has a positive electrode current collector and a positive electrode mixture layer formed on both surfaces of the positive electrode current collector, and
the positive electrode has a tapered portion such that, near an inner end of winding, the positive electrode becomes thinner toward the inner end of winding from one surface of the positive electrode mixture layer to the positive electrode current collector.

### Constitution 2:

The non-aqueous electrolyte secondary battery according to Constitution 1, wherein the positive electrode has the tapered portion such that, near the inner end of winding, the positive electrode becomes thinner toward the inner end of winding from a surface of the positive electrode mixture layer on an inner peripheral side to the positive electrode current collector.

### Constitution 3:

The non-aqueous electrolyte secondary battery according to Constitution 1 or 2, wherein a length L of the tapered portion in a longitudinal direction of the positive electrode is less than or equal to 1 mm.

### Constitution 4:

The non-aqueous electrolyte secondary battery according to any one of Constitutions 1 to 3, wherein a thickness D of the positive electrode is greater than or equal to 170 µm.

### Constitution 5:

The non-aqueous electrolyte secondary battery according to any one of Constitutions 1 to 4, wherein a length L of the tapered portion in a longitudinal direction of the positive electrode and a thickness D of the positive electrode satisfy L/D ≤ 6.

### Constitution 6:

The non-aqueous electrolyte secondary battery according to any one of Constitutions 1 to 5, wherein
the positive electrode mixture layer includes a positive electrode active material, and
the positive electrode active material is an NCA-based lithium-transition metal composite oxide or an NCM-based lithium-transition metal composite oxide.

### REFERENCE SIGNS LIST

10 Secondary battery, 11 Positive electrode, 11a Inner end of winding, 11b Outer end of winding, 12 Negative electrode, 13 Separator, 14 Electrode assembly, 15 Exterior, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening, 27 Gasket, 28 Winding axis, 30 Positive electrode current collector, 32 Positive electrode mixture layer, 34 Positive electrode exposed portion, 36 Tapered portion, 40 Negative electrode current collector, 42 Negative electrode mixture layer, 44 Negative electrode exposed portion

## Claims

1. A non-aqueous electrolyte secondary battery, comprising:
an electrode assembly in which a band-shaped positive electrode and a band-shaped negative electrode are wound with a separator interposed therebetween;
a non-aqueous electrolyte; and
an exterior housing the electrode assembly and the non-aqueous electrolyte, wherein
the positive electrode has a positive electrode current collector and a positive electrode mixture layer formed on both surfaces of the positive electrode current collector, and
the positive electrode has a tapered portion such that, near an inner end of winding, the positive electrode becomes thinner toward the inner end of winding from one surface of the positive electrode mixture layer to the positive electrode current collector.

2. The non-aqueous electrolyte secondary battery according to claim 1, wherein the positive electrode has the tapered portion such that, near the inner end of winding, the positive electrode becomes thinner toward the inner end of winding from a surface of the positive electrode mixture layer on an inner peripheral side to the positive electrode current collector.

3. The non-aqueous electrolyte secondary battery according to claim 1, wherein a length L of the tapered portion in a longitudinal direction of the positive electrode is less than or equal to 1 mm.

4. The non-aqueous electrolyte secondary battery according to claim 1, wherein a thickness D of the positive electrode is greater than or equal to 170 µm.

5. The non-aqueous electrolyte secondary battery according to claim 1, wherein a length L of the tapered portion in a longitudinal direction of the positive electrode and a thickness D of the positive electrode satisfy L/D ≤ 6.

6. The non-aqueous electrolyte secondary battery according to claim 1, wherein
the positive electrode mixture layer includes a positive electrode active material, and
the positive electrode active material is an NCA-based lithium-transition metal composite oxide or an NCM-based lithium-transition metal composite oxide.
